# DEMANDE DE BREVET EUROPEEN

(11) **EP 1 847 362 A1**
(43) Date de publication de la demande: **24.10.2007**
(21) Numéro de dépôt: 07356051.8
(22) Date de dépôt: 16.04.2007
(51) Int. Cl.: B26D 3/16, B26B 29/06, B26B 15/00

(54) **Système multicoupe**

(30) Priorité: 18.04.2006 FR 0603395
(71) Demandeur: Juston, Robert, 69003 Lyon (FR)
(72) Inventeur: Juston, Robert, 69003 Lyon (FR)

(57) **Abrégé**

Dispositif pour découper rapidement , avec précision , un effort physique limité et en toute sécurité des matériaux (plans ou cylindriques), objets divers.

Le matériau est fixé par une pince (A) (plus ou moins longue et qui peut avoir des mâchoires (B) ou un système de vis de serrage) Cette pince constitue un plan de coupe latéral (C) contre lequel on applique progressivement , de façon oblique et perpendiculairement à l'axe principal du matériau à découper une mèche rotative coupante (D) (ou multilame longiligne coupante) fixée à un moteur rotatif (E). Ce moteur rotatif (manuel, thermique ou électrique), dont la puissance et la vitesse sont adaptés au matériau , est solidement fixé sur un pivot perpendiculaire au plan de coupe latéral (C). La mèche (ou multilame) (D) est choisie selon le matériau à couper. Un ressort (J) module la poussée de coupe. Une grille de protection (H) assure la sécurité.

## Description

La présente invention concerne un dispositif pour découper rapidement,avec un effort physique limité et en toute sécurité des matériaux (plans ou cylindriques) ou objets divers.

La découpe des matériaux s'effectue traditionnellement avec une lame coupante plane ou circulaire à laquelle on applique un mouvement de va-et-vient ou rotatif et le plus souvent perpendiculairement au plan travaillé ; dans le cas d'un sécateur, la coupe se réalise par écrasement entre 2 lames coupantes affûtées et parallèles. Les outils de découpe disponibles nécessitent souvent un effort de maintien pas toujours compatible avec la précision souhaitée du geste; les systèmes utilisés sont par ailleurs souvent difficiles à totalement sécuriser Dans le cas du sécateur traditionnel (hors sécateur électrique professionnel, avec des batteries souvent lourdes à porter ) le travail de la main est important.

Le dispositif selon l'invention permet de remédier à deux inconvénients: une fixation sur l'objet à découper allège l'effort de maintien de l'outil et permet une meilleure précision de découpe.Pour l'utilisation en mode sécateur le travail de la main est trés largement réduit .Le dispositif comporte : une pince (A) (avec ma-choires (B) : zéro,une à plusieurs selon le modèle ) et qui permet de fixer le matériau à découper et de constituer un plan de coupe latéral (C). Sur ce plan de coupe latéral , on applique progressivement de façon oblique et perpendicu-lairement à l'axe principal du matériau, une mèche rotative coupante (D) (ou multilame longiligne coupante).Cette mèche est fixée sur un bloc moteur(E). Le bloc moteur (E) permet, selon le type d'énergie utilisée et selon la nature de la coupe, une vitesse de rotation de la mèche rotative coupante (D) de 20 tours / minute à 50.000 tours/minute.Le moteur (E), solidement fixé à l'axe d'ouverture de la pince, est basculé ( avec la mèche rotative coupante (D) ou la multilame ) en cours de travail, contre le plan de coupe latéral (C) et parallèlement à ce plan.

Sur la partie à risque du dispositif , une grille de protection rigide (H) sécurise le dispositif en recouvrant les parties en rotation tout en facilitant l'évacuation des déchets de coupe.Un système (I) permet ,après la fermeture de la pince(A) de déclencher la rotation de la mèche rotative coupante (D)(ou la multilame ) sur le ma-tériau à découper.Par sécurité, le moteur ne peut se déclencher qu'aprés fermetu-re de la pince (A): contacteur de sécurité (K).

Dispositif pour découper rapidement avec précision , avec un effort physique limité et en toute sécurité des matériaux (plans ou cylindriques), ou objets divers. Le matériau est fixé avec une pince (A) qui , selon les modes de réalisation , peut être plus ou moins longue et comporter : des mâchoires (B) ou un système de vis de serrage. Cette pince permet de constituer un plan de coupe latéral (C) contre lequel on applique progressivement de façon oblique et perpendiculairement à l'axe principal du matériau à découper, une mèche rotative coupante (D) ( ou multilame longiligne coupante). Cette mèche est fixée sur un bloc mo-teur (E) .Le moteur (E) peut être manuel , thermique ( à explosion ) ou électrique ( avec batterie ou alimentation filaire ); il permet selon le type d'énergie utilisée et la nature de la coupe, une vitesse de rotation de 20 tours / minute à 50.000 tours/ minute. Le moteur (E), solidement fixé à l'axe d'ouverture de la pince, est basculé ( avec la mèche rotative coupante (D) ou la multilame ) en cours de travail contre le plan de coupe latéral (C) et parallèlement à ce plan.

Dispositif en mode de réalisation "Sécateur " ou "Système de coupe d'un cylindre d'un maximum de 5 centimètres de diamètre " ou "Système de coupe d'une poutre d'un maximum de 5 centimètres de coté ", selon schéma : 1a -profil / 1 a-face.
La pince (A) sur la partie droite du dispositif , comporte 1 à 3 mâchoires (B) . La partie centrale est occupée par une mèche rotative coupante ( ou multilame" longiligne coupante spécifique " (D) fixée sur le moteur (E).
La mèche (ou multilame) est plaquée de façon oblique contre le plan de coupe latéral (C ) et parallèlement à ce plan .Le bloc moteur (E) est abrité dans la poignée , il est électrique ( avec batterie ou avec fil d'alimentation), sa vitesse de rotation est comprise entre 20 tours/ minute et 50.000 tours /minute.
Le rapprochement des deux parties de la pince (A) constitue un plan de coupe latéral (C) contre lequel vient s'appliquer la mèche (D) de façon oblique et perpendiculairement à l'axe principal de la tige ou du cylindre à couper .Dans ce modèle , le bloc moteur (E )( avec la mèche -ou la multilame (D) ) solidement fixé à l'axe d'ouverture de la pince , est basculé progressivement à l'aide d'un bouton poussoir (I) qui déclenche le moteur après que la pince ait été fermée : contacteur de sécurité : (K). Un ressort (J) placé sous le bloc moteur permet de moduler la poussée à exercer par la mèche rotative coupante (D) (ou multi-lame) sur la partie à découper. Sur la partie droite du dispositif, une grille de protection rigide (H) sécurise le dispositif en recouvrant les parties en rotation tout en facilitant l'évacuation des déchets de coupe.

Dispositif en mode de réalisation" échenilloir" ou " coupe branche": selon schéma 2a profil/ 2a-face.La pince(A) actionnée par un câble, placée au bout d'une tige télescopique,permet de fixer une branche et de constituer un plan de coupe latéral (C) .Le bloc moteur électrique (E) (avec batterie ou alimentation filaire ) est fixé sur un axe soudé à la mâchoire de la pince. Le bloc moteur peut osciller autour de cet axe perpendiculaire à la mâchoire de la pince. Une mèche rotative coupante (D) (ou lame longiligne coupante ) est fixée sur le bloc mo-teur. Un câble fixé à l'arriére du bloc moteur (E) permet de mettre en route ce moteur et d'appliquer progressivement, de façon oblique , la mèche cou-pante (D) sur le plan de coupe latéral (C).

Dispositif en mode de réalisation ''Tronçonneuse bois / Coupe arbre " ou "Coupe poutre de plus de 5 centimètres de coté " selon schéma 3a-profil / 3 a-face .La pince (A) avec vis de serrage est fixée au ras du sol, autour du tronc de l'arbre ou de la poutre à découper , et permet de constituer un plan de coupe latéral (C). Sur un rebord de la pince (A), un axe métallique ( soudé perpendiculairement à la pince ) permet de solidement assujettir le bloc mo-teur (E) (qui peut pivoter autour de cet axe ). Une mèche rotative coupante (D ) ou ( multilame "spécifique" ) est fixée sur le moteur. La mèche (D ) ( ou multilame spécifique ) est plaquée de façon oblique et horizontalement sur le plan de coupe latéral(C) contre l'arbre ( ou la poutre ).Le moteur (E) peut être soit manuel , thermique ou électrique .Pour sécuriser la coupe ( en particulier pour la coupe d'un tronc d'arbre en milieu naturel ) et faciliter le travail de la mèche rotative coupante (D) (ou multi lame), après une première entaille, un coin métal-lique sera disposé sur la partie externe de la mâchoire dans cette entaille.

Dispositif en mode de réalisation "Découpe panneaux matériaux " ou "Découpe matériaux" selon schéma 4a-profil / 4b-face .
Dans ce mode de réalisation, les mâchoires (B) de la poignée (A) peuvent être plus ou moins longues et conçues pour bien fixer, sans les dégrader, des matériaux tels que: carton , plastique , placoplatre, bois , panneaux laminés ou stratifiés, aluminium, faïence , céramique , fibre de verre,métaux divers, et constituer des "plan de coupe latéral" (C) plus ou moins longs et de formes diverses. La mèche rotative coupante (D ) (ou multilame longiligne coupante ), sera spécifique selon les matériaux.
Un système de ressort ( J ) permet de moduler la pression du "bloc mo-teur+mèche " sur la surface à couper. Le choix du moteur (E) sera fonction de la puissance requise ainsi que de la vitesse de rotation souhaitée .Un bou-ton poussoir (I) permet de déclencher le moteur et d'exercer un pression avec le bloc "moteur+mèche" sur le matériau à couper. Une grille de sécurité ( H ) sera disposée autour de la partie en rotation.

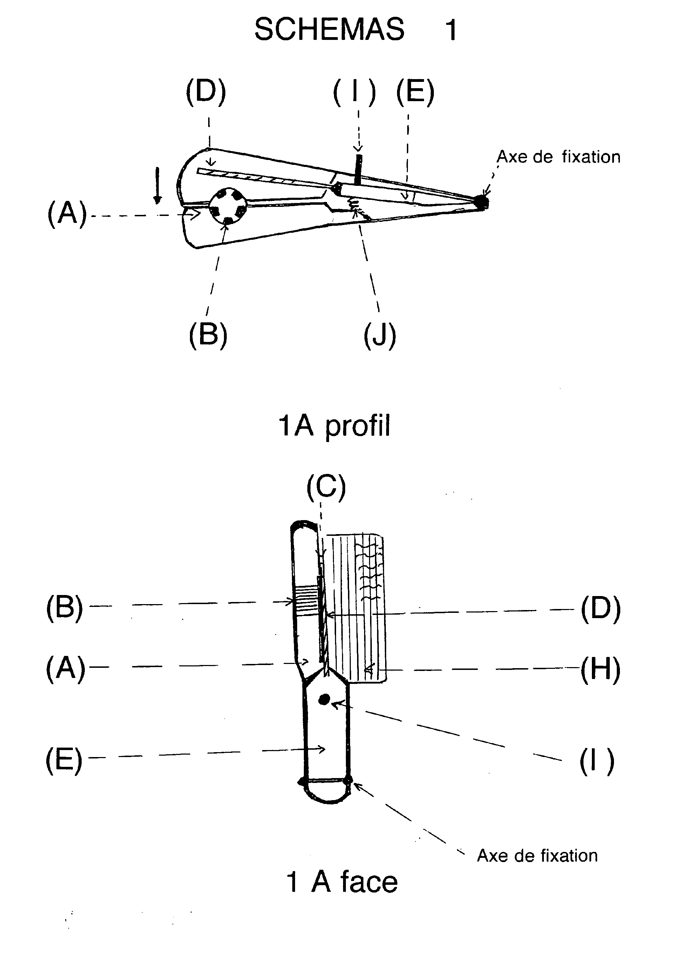

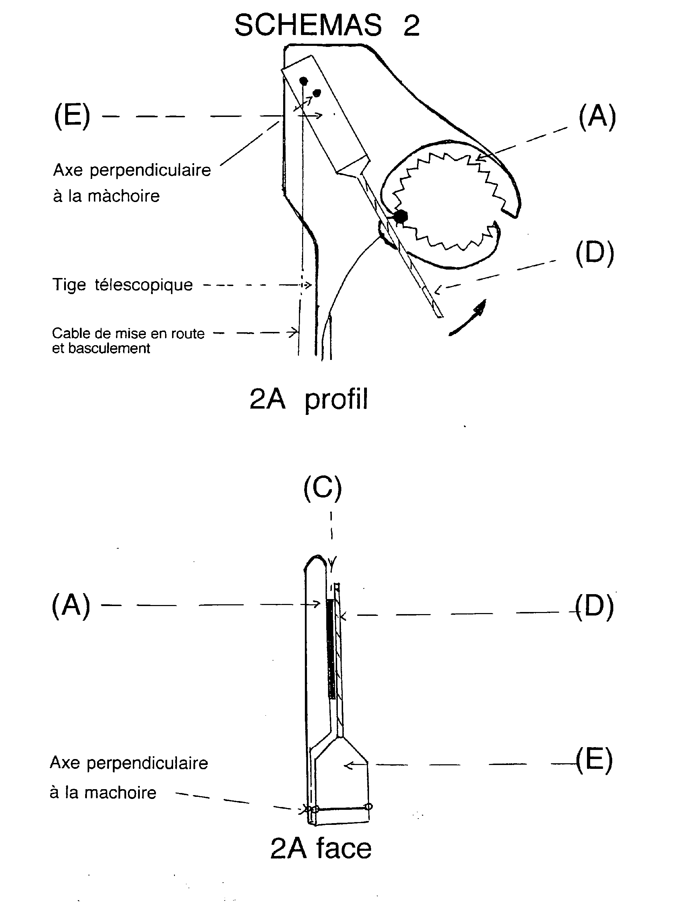

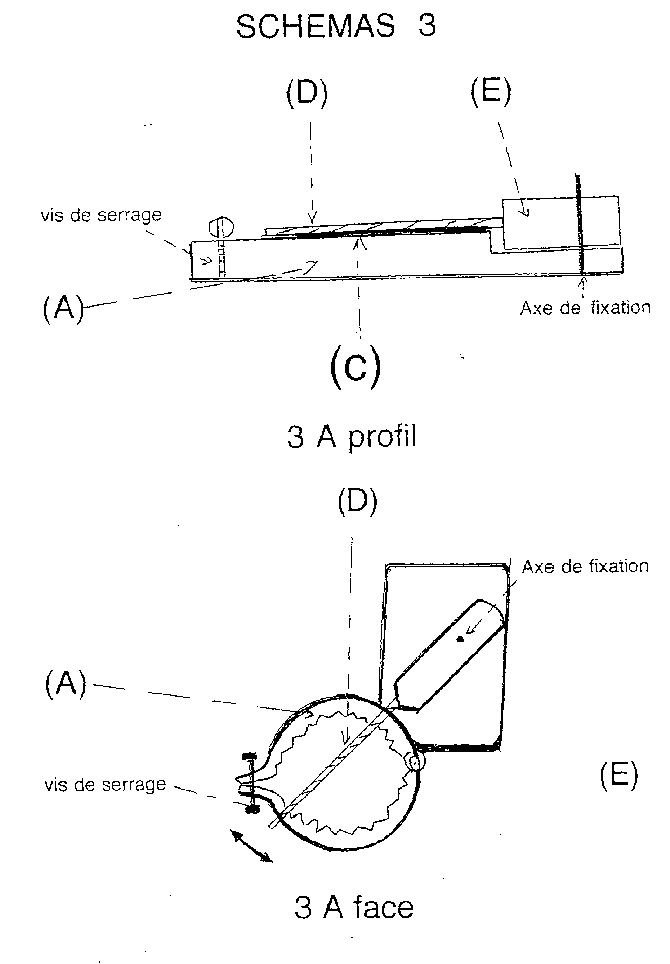

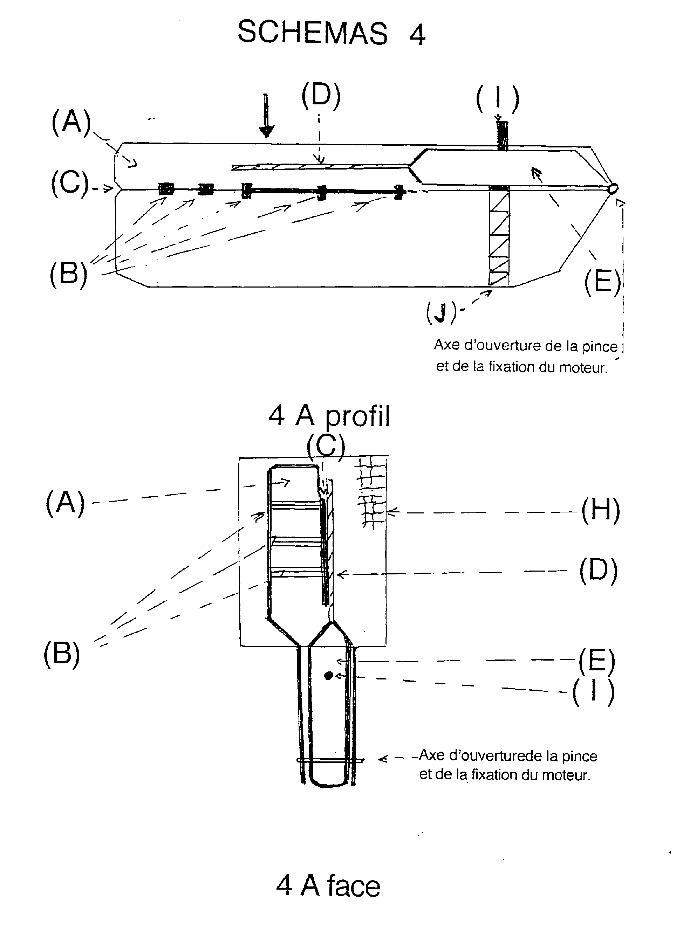

## Revendications

1. Dispositif pour découper rapidement avec précision , avec un effort physique limité et en toute sécurité des matériaux (plans ou cylindriques), ou objets divers, **caractérisé en ce que** le matériau est fixé avec une pince (A) qui , selon les modes de réalisation , peut être plus ou moins longue et comporter : des mâchoires (B) ou un système de vis de serrage ; cette pince permet de constituer un plan de coupe latéral (C) contre lequel on applique progressivement de façon oblique et perpendiculairement à l'axe principal du matériau à découper, une mèche rotative coupante ( D) ( ou multilame longiligne coupante); cette mèche est fixée sur un bloc moteur (E ); le moteur (E) peut être manuel, thermique( à explosion ) ou électrique avec batterie ou alimentation filaire ); il permet selon le type d'énergie utilisée et la nature de la coupe, une vitesse de rotation de 20 tours / minute à 50.00 tours/ minute ; le moteur (E), solidement fixé à l'axe d'ouverture de la pince, est basculé ( avec la mèche rotative coupante (D) ou la multilame) en cours de travail contre le plan de coupe latéral (C) et parallèlement à ce plan.

2. Dispositif selon la revendication 1 , **caractérisé en ce qu'**il fonctionne en mode de réalisation "Sécateur" ou "Système de coupe d'un cylindre d'un maximum de 5 centimètres de diamètre" ou "Système de coupe d'une poutre d'un maximum de 5 centimètres de coté "; la pince (A) sur la partie droite du dispositif, comporte 1 à 3 mâchoires (B) ; la partie centrale est occupée par une mèche rotative coupante ( ou multilame" longiligne coupante spécifique ")(D) fixée sur le moteur (E) ; la mèche (ou multilame) est plaquée de façon oblique contre le plan de coupe latéral (C ) et parallèlement à ce plan ; le bloc moteur (E) est abrité dans la poignée , il est électrique ( avec batterie ou avec fil d'alimentation), sa vitesse de rotation est comprise entre 20 tours/ minute et 50.000 tours / minute ; le rapprochement des deux parties de la pince (A) constitue un plan de coupe latéral (C) contre lequel vient s'appliquer la mèche (D) de façon oblique et perpendiculairement à l'axe principal de la tige ou du cylindre à couper ; dans ce modèle, le bloc moteur (E )( avec la mèche -ou la multilame (D) ) solidement fixé à l'axe d'ouverture de la pince, est basculé progressive-ment à l'aide d'un bouton poussoir (I) qui déclenche le moteur après que la pince ait été fermée : contacteur de sécurité : (K) ; un ressort (J) placé sous le bloc moteur permet de moduler la poussée à exercer par la mèche rotative coupante (D) (ou multilame) sur la partie à découper ; sur la partie droite du dispositif , une grille de protection rigide (H) sécurise le dispositif en recouvrant les parties en rotation tout en facilitant l'évacuation des déchets de coupe.

3. Dispositif selon la revendication 2, **caractérisé en ce qu'**il fonctionne en mode de réalisation "Échenilloir" ou "Coupe branche ; la pince(A) actionnée par un câble,placée au bout d'une tige télescopique, permet de fixer une branche et de constituer un plan de coupe latéral (C) ; le bloc moteur électrique (E) (avec batterie ou alimentation filaire) est fixé sur un axe soudé à la mâchoire de la pince ; le bloc moteur peut osciller autour de cet axe perpendiculaire à la mâchoire de la pince ; une mèche rotative coupante (D) (ou lame longiligne coupante ) est fixée sur le bloc moteur ; un câble fixé à l'arriére du bloc moteur (E) permet de mettre en route ce moteur et d'appliquer progressivement, de façon oblique, la mèche coupante (D) sur le plan de coupe latéral (C).

4. Dispositif selon la revendication 1,**caractérisé en ce qu'**il fonctionne en mode de réalisation "Tronçonneuse bois / Coupe arbre " ou "Coupe poutre de plus de 5 centimètres de coté" ; la pince (A) avec vis de serrage est fixée au ras du sol, autour du tronc de l'arbre ou de la poutre à découper ,et permet de constituer un plan de coupe latéral (C) ; sur un rebord de la pince (A), un axe métallique ( soudé perpendiculairement à la pince ) permet de solidement assujettir le bloc moteur (E) (qui peut pivoter autour de cet axe ) ; une mèche rotative coupante (D ) ou ( multilame "spécifique" ) est fixée sur le moteur ; la mèche (D ) ( ou multilame spécifique ) est plaquée de façon oblique et horizontalement sur le plan de coupe latéral (C) contre l'arbre ( ou la poutre ) ; le moteur (E) peut être soit manuel , thermique ou électrique ; pour sécuriser la coupe ( en particulier pour la coupe d'un tronc d'arbre en milieu naturel) et faciliter le travail de la mèche rotative coupante (D) (ou multilame), après une première entaille, un coin métallique sera disposé sur la partie externe de la mâchoire dans cette entaille.

5. Dispositif selon la revendication 1 , **caractérisé en ce qu'**il fonctionne en mode de réalisation"Découpe panneaux matériaux"ou"Découpe matériaux"; dans ce mode de réalisation, les mâchoires (B) de la poignée (A) peuvent être plus ou moins longues et conçues pour bien fixer, sans les dégrader, des matériaux tels que : carton, plastique , placoplatre, bois, panneaux laminés ou stratifiés, aluminium, faïence, céramique, fibre de verre,métaux divers, et constituer des "plan de coupe latéral" (C) plus ou moins longs et de formes diverses ; la mèche rotative coupante (D) (ou multilame longiligne coupante ), sera spécifique selon les matériaux, un système de ressort (J) permet de moduler la pression du " bloc moteur+mèche " sur la surface à couper ; le choix du moteur (E) sera fonction de la puissance requise ainsi que de la vitesse de rotation souhaitée ; un bouton poussoir (I) permet de déclencher le moteur et d'exercer un pression avec le bloc "moteur+mèche" sur le matériau à couper ; une grille de sécurité ( H ) sera disposée autour de la partie en rotation.
